# EUROPEAN PATENT SPECIFICATION

(11) **EP 1 664 999 B1**
(45) Date of publication and mention of the grant of the patent: **12.08.2015**
(21) Application number: 04787512.5
(22) Date of filing: 16.09.2004
(51) Int. Cl.: H04W 8/24, H04W 88/06, H04L 29/08, G06F 9/445, H04L 29/06

(54) **Wirelessly providing an update to a network appliance**
Drahtlose Bereitstellung einer Aktualisierung für eine Netzwerk-Vorrichtung
Transmission sans fil d'une mise à jour à un dispositif relié à un réseau

(30) Priority: 16.09.2003 US 663356
(43) Date of publication of application: 07.06.2006
(73) Proprietor: Nokia Technologies Oy, 02610 Espoo (FI)
(72) Inventor: SCOTT, Robert, Paxton, Sunnyvale, CA 94088-0038 (US); SMITH, Gregory, J., Santa Clara, CA 95051 (US)
(74) Representative: Style, Kelda Camilla Karen
(86) International application number: PCT/IB2004/003000
(87) International publication number: WO 2005/026868

(56) References cited:
- EP-A1- 1 139 680
- WO-A2-02/01795
- US-A1- 2002 181 060
- US-A1- 2003 112 789
- HARTWIG S ET AL: "Wireless microservers", IEEE PERVASIVE COMPUTING, IEEE SERVICE CENTER, LOS ALAMITOS, CA, US, vol. 1, no. 2, 1 April 2002 (2002-04-01), pages 58-66, XP011094478, ISSN: 1536-1268, DOI: 10.1109/MPRV.2002.1012338

## Description

### Field of the Invention

The present invention relates to managing the operation of an appliance on a network, and more particularly to providing a software update to a network appliance over a secure wireless connection with relatively limited range.

### Background of the Invention

Network appliances such as routers, hubs, firewalls, file servers, and the like, are often disposed in a physical location such as a data center where access if typically restricted to authorised personnel. To increase the number of network appliances that can be located in a data center, several network appliances may be positioned in a vertical rack and several of these racks are often disposed in the data center. Also, a cable that is directly connect to some computing device such as a notebook computer or a wired network interface is typically employed to upload a software update to a network appliance.

However, since physical access in a data center to a network appliance is often difficult due to space constraints, it is often difficult to identify a particular network appliance and install a separate cable for configuring and/or managing its operation. Also, under some circumstances, providing a software update over a wired network may be undesirable or inconvenient.

Hartwig Set Al: "Wireless microservers" IEEE Pervasive Computing, IEE Service Center, Los Alamitos, CA, US, Vol. 1, no.2, 1 April 2002, pages 58-66, XP011094478 discloses applying a general-purpose, pluggable microserver, based on wireless applications protocol and Bluetooth technology for remote control purposes.

US 2002/0181060 discloses continuously and automatically beaming data by direct transmission from a host device to a remote device.

There is provided according to a first aspect a method for providing an update to a network appliance comprising a network interface and a first wireless interface, comprising: enabling the network appliance to provide a beacon on said first wireless interface, wherein the beacon is created with a radio signal that is generated with low power; wherein said network appliance is disposed in one or more data centers, if a mobile node receives the beacon and is positioned within said one or more data centers or in a secure area known to an operator of said one or more data centers, enabling the mobile node to pair with the network appliance; on a second wireless interface included with the mobile node; if the mobile node is paired with the network appliance, pushing an application from the mobile node to the network appliance; and enabling the mobile node to wirelessly communicate at least one update to the pushed application over a short distance, wherein the update is provided to the network appliance for execution.

There is provided according to a second aspect a system for providing an update to a network appliance with a mobile node, comprising a first wireless interface that is included with the network appliance and enables the network appliance to provide a beacon, wherein the beacon is generated with low power, wherein said network appliance is disposed in one or more data centers; a network interface that is included with the network appliance for coupling the network appliance to a communications network; a second wireless interface that is included with the mobile node, wherein if the mobile node receives the beacon and is positioned within said one or more data centers or in a secure area known to an operator of said one or more data centers, the second wireless interface enables the mobile node to pair with the network appliance, and an application that is pushed from the mobile node to the network appliance, wherein the application enables the mobile node to wirelessly communicate at least one update over a short distance to the network appliance, and wherein the update is provided to the network appliance for execution.

There is provided according to a third aspect a mobile node including: a first wireless interface configured to enable the mobile node to pair with a network appliance comprising a second wireless interface and a network interface disposed in one or more data centers if the mobile node receives a low power beacon from said second wireless interface and said apparatus is positioned within said one or more data centers or in a secure area known to an operator of said one or more data centers; the mobile node being further configured to: push an application to the network appliance, wherein the application enables the mobile node to wirelessly communicate at least one update over a sort distance to the network appliance and wherein the update is provided to the network appliance for execution.

There is provided according to a fourth aspect a computer readable media, tangibly embodying instructions to perform actions, comprising: enabling a network appliance comprising a first wireless interface and a network interface to provide a beacon on said first wireless interface, wherein the beacon is generated with low power; wherein said network appliance is disposed in one or more data centers; if a mobile node receives the beacon and is positioned within one or more data centers or in a secure area known to an operator of said one or more data centers, enabling the mobile node to pair with the network appliance; if the mobile node is paired with the network appliance, pushing an application from the mobile node to the network appliance; and enabling the mobile node to wirelessly communicate at least one update to the pushed application over a short distance, wherein the update is provided to the network appliance for execution.

There is provided according to a fith aspect a method comprising: enabling a mobile node to pair on a first wireless interface with a network appliance comprising the first wireless interface and a network interface disposed in one or more data centers if the mobile node receives a low power beacon from a second wireless interface included with said network appliance and said mobile node is positioned within said one or more data centers or in a secure area known to an operator of said one or more data centers; pushing an application to the network appliance, wherein the application enables the mobile node to wirelessly communicate at least one update over a short distance to the network appliance and wherein the update is provided to the network appliance for execution.

### Brief Description of the Drawings

FIGURE 1 illustrates a schematic diagram of an exemplary system for enabling a mobile node to wirelessly communicate with network appliances;
FIGURE 2 shows a schematic diagram of an exemplary network appliance;
FIGURE 3 shows a system diagram of exemplary communication paths between a network appliance and a computer and a mobile node; and
FIGURE 4 shows a flow diagram, in accordance with the present invention.

### Detailed Description of the Preferred Embodiment

In the following detailed description of exemplary embodiments of the invention, reference is made to the accompanied drawings, which form a part hereof, and which is shown by way of illustration, specific exemplary embodiments of which the invention may be practiced. Each embodiment is described in sufficient detail to enable those skilled in the art to practice the invention, and it is to be understood that other embodiments may be utilized, and other changes may be made, without departing from the scope of the present invention. The following detailed description is, therefore, not to be taken in a limiting sense, and the scope of the present invention is defined only by the appended claims.

Throughout the specification and claims, the following terms take the meanings explicitly associated herein, unless the context clearly dictates otherwise. The term "packet" refers to an IP packet. The term "flow" means a flow of packets. The term "connection" refers to a flow or flows of packets that share a common path. The term "node" refers to a network element that interconnects one or more networks or devices. The term "user" refers to any person or customer such as a business or organization that employs a device to communicate or access resources over a network. The term "operator" refers to any technician or organization that maintains or services a packet-based network.

The term "network appliance" means a computing device that is coupled to a network and is designed to perform at least one function relating to the network. Exemplary network appliances include, but are not limited to, routers, switches, firewalls, content filters, file servers, network traffic load balancers, hubs, and the like.

The term "router" refers to a dedicated network element that receives packets and forwards them to their destination. In particular, a router is used to extend or segment networks by forwarding packets from one logical network to another. A router typically operates at layer 3 and below of the Open Systems Interconnection (OSI) reference model for networking. However, some routers can provide additional functionality that operates above layer 3 of the OSI reference model.

The term "core network" refers to any packet switched digital network. For example, Frame Relay, Asynchronous Transfer Mode (ATM) and Switched Megabit Data Service, and the like.

Referring to the drawings, like numbers indicate like parts throughout the views. Additionally, a reference to the singular includes a reference to the plural unless otherwise stated or is inconsistent with the disclosure herein.

A method, apparatus and system is provided for providing a communication interface in a network appliance that enables a software update for the network appliance to be securely and wirelessly provided by a mobile node over a relatively limited (short) distance with a mobile node. The operator of the mobile node is authenticated and communication between the network appliance and the mobile node is encrypted. Even if an unauthorized person was able to be positioned in relatively close proximity to a network appliance such as within the physical confines of a data center, these authentication and encryption measures make it difficult for an unauthorized update to be provided to the network appliance.

Updating the software for a network appliance can include one or more actions including, but not limited to, deleting existing files, rebooting, uploading new files, such as binaries, scripts, JAVA applications, and the like.

In one embodiment, an exemplary wireless interface enables communication between a network appliance and a computing device with a secure and relatively low power wireless communication protocol, such as provided by the Bluetooth specification.

Bluetooth is a specification for using low-power radio to link mobile devices and computers over short distances without wires. The name "Bluetooth" is borrowed from Harald Bluetooth, who was a king in Denmark more than 1,000 years ago. The name was chosen in part to reflect the relatively important role that Scandinavian countries play in the wireless communication industry.

Bluetooth devices establish a network that uses a dynamic topology called a piconet or personal area network (PAN) for sharing a common communication channel with a total capacity of 1 megabit per second. Each piconet can include a minimum of two and a maximum of eight Bluetooth peer devices. Bluetooth technology uses low power (1 milliwatt) to transmit radio signals over a relatively short distance, typically no more than 30 feet (10 meters). By comparison, many mobile telephones transmit a radio signal at three watts.

The Bluetooth specification, developed by an industry consortium, specifies spread spectrum frequency hopping in the 2.4 Giga hertz range for radio signals, the same range used by the IEEE 802.11b protocol. However, even with relatively low power, a Bluetooth signal can still enable communication between several devices in different rooms that are physically positioned no more than 10 meters away from each other.

Bluetooth provides link-layer encryption and can establish an encrypted link between two Bluetooth devices. Bluetooth can establish link encryption between two devices when a symmetric encryption key is created in both of them. This process, called pairing, uses a shared secret known as a PIN that is passed out-of-band, as opposed to over a Bluetooth channel. The shared symmetric encryption keys are then created and exchanged in a secure manner with the use of the PIN. This pairing process can be classified as a key-management or a key-exchange mechanism.

Bluetooth authentication verifies that the other device has the same encryption key before enabling encryption on the wireless connection. This is a connection-management issue designed to prevent the confusion that would result if the nodes on the connection used different encryption keys.

### Illustrative Operating Environment

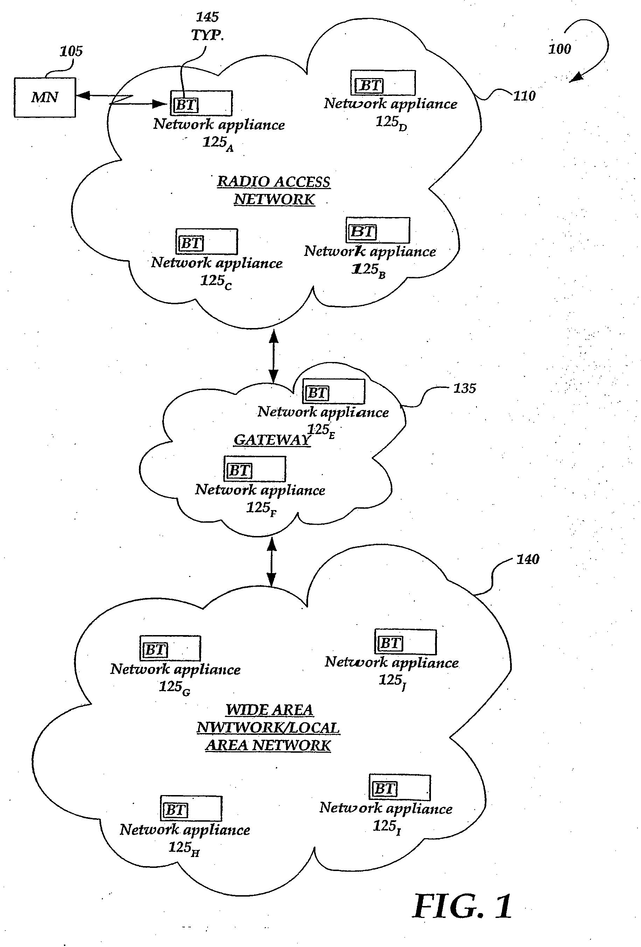

With reference to FIGURE 1, an exemplary network system in which the invention may operate is illustrated. As shown in the figure, exemplary network system 100 includes mobile node (MN) 105, radio access network (RAN) 110, gateway 135, network appliance 125_{A-J} and wide area network (WAN)/local area network (LAN) 140. Typically, the network appliances for RAN 110, gateway 135 and WAN 140 would be disposed in one or m ore d ata centers w here proximity a nd access to their respective network appliances would be limited to authorized personnel, such as system administrators, technicians, and the like.

Mobile node 105 is arranged to enable wireless communication with each network appliance that includes a wireless module (BT) 145. Each BT 145 is arranged to support a secure wireless protocol that enables communication over a relatively short distance, such as the Bluetooth protocol, and the like. Due in part to this relatively limited distance and restricted access to a typical data center, mobile node 105 wirelessly communicates with a network appliance from a position either within the data center or in a secure area that is known to the operator of the data center. Also, the limited distance/range for wirelessly communicating with the network appliance doesn't prevent authorized personnel from wireless communicating with a network appliance, but it can increase the difficulty of unauthorized communication by a person that is positioned outside the data center from doing so.

Generally, MN 105 may include any device capable of communicating with BT 145. Such devices include cellular telephones, smart phones, pagers, radio frequency (RF) communication devices, integrated devices combining one or more of the preceding devices, and the like. MN 105 may also include other devices that have a wireless interface such as Personal Digital Assistants (PDAs), handheld computers, personal computers, multiprocessor systems, microprocessor-based or programmable consumer electronics, network PCs, wearable computers, and the like.

RAN 110 may include both wireless and wired components. For example, RAN 110 may include a cellular tower that is linked to a wired telephone network. Typically, the cellular tower carries communication to and from cell phones, pagers, and other wireless devices, and the wired telephone network carries communication to regular phones, long-distance communication links, and the like. RAN 110 may include network devices, such as network appliances 125_{A-D}, as shown in the figure. Generally, at least because network appliances 125_{A-J} are coupled to a network, they are vulnerable to security breaches, such as invasion by unauthorized processes and management by unauthorized persons.

RAN 110 is coupled to WAN/LAN 140 through gateway 135. Gateway 135 routes information between RAN 110 and WAN/LAN 140. For example, a mobile node, such as MN 105, may request access to the Internet by calling a certain number or tuning to a particular frequency. Upon receipt of the request, RAN 110 is configured to pass information between MN 105 and gateway 135. Gateway 135 may translate requests from MN 105 to a specific protocol, such as hypertext transfer protocol (HTTP) messages, and then send the messages to WAN/LAN 140. Gateway 135 translates responses to such messages into a form compatible with the requesting mobile node. Gateway 135 may also transform other messages sent from MN 105 into information suitable for WAN/LAN 140, such as e-mail, audio, voice communication, contact databases, calendars, appointments, and the like. As shown in the figure, gateway 135 may include network devices, such as network appliances 125_{E-F} that include wireless module BT 145.

WAN/LAN 140 is an IP packet based backbone network that transmits information between computing devices. One example of WAN is the Internet. An example of a LAN is a network used to connect computers in an office or a home. A WAN may connect multiple LANs. As shown in the figure, WAN/LAN 140 may include network devices, such as network appliances 125_{G-J} that may also include wireless module BT 145.

Communication links within LANs typically include twisted wire pair, fiber optics, or coaxial cable, while communication links between networks may utilize analog telephone lines, full or fractional dedicated digital lines including T1, T2, T3, and T4, Integrated Services Digital Networks (ISDNs), Digital Subscriber Lines (DSLs), wireless links, or other communications links.

Network system 100 may include many more components than those shown in FIGURE 1. However, the components shown are sufficient to disclose an illustrative embodiment for practicing the present invention.

The media used to transmit information in the communication links as described above illustrates one type of computer-readable media, namely communication media. Generally, c omputer-readable m edia i ncludes any media that can be accessed by a computing device. Communication media typically embodies . computer-readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, communication media includes wired media such as twisted pair, coaxial cable, fiber optics, wave guides, and other wired media and wireless media such as acoustic, RF, infrared, and other wireless media.

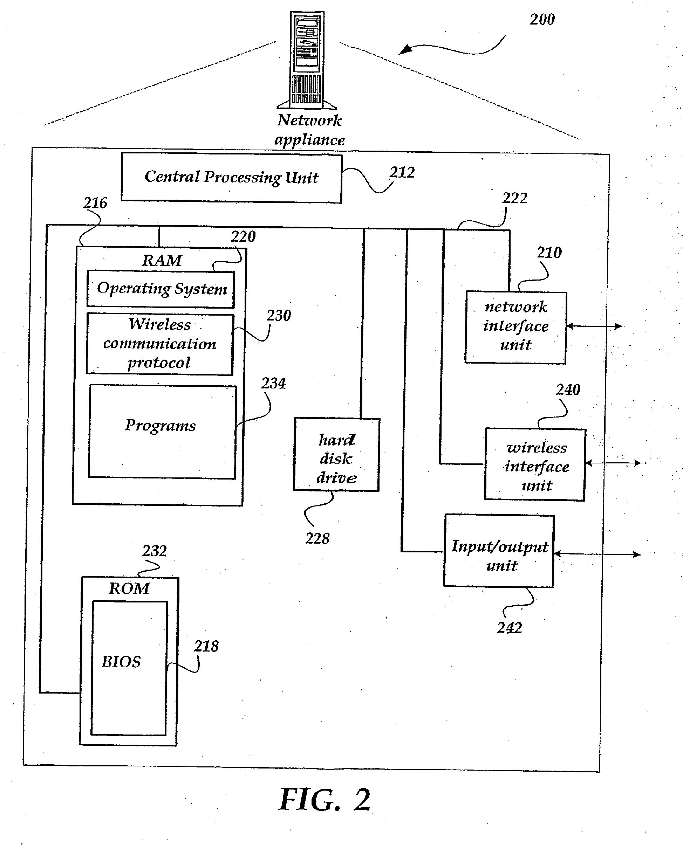

FIGURE 2 illustrates a schematic diagram that shows an exemplary network appliance. Network appliance 200 may include many more components than those shown in FIGURE 2. However, the components shown are sufficient to disclose an illustrative embodiment for practicing the present invention.

As shown in FIGURE 2, network appliance 200 may be coupled to RAN 105 or WAN/LAN 140, or other communications network, via network interface unit 210. Network interface unit 210 includes the necessary circuitry and protocols for coupling network appliance 200 to RAN 105 or WAN/LAN 140. Typically, there is one network interface unit 210 provided for each network coupled to network appliance 200.

Network appliance 200 also includes processing unit 212, and a mass memory, all connected via bus 222. The mass memory generally includes RAM 216, ROM 232, and optionally, one or more permanent mass storage devices, such as hard disk drive 228, and/or a tape drive, CD-ROM/DVD-ROM drive, floppy disk drive, and the like. The mass memory stores operating system 220 for controlling the operation of network appliance 200. This component may comprise a general purpose operating system 220, or the operating system may be specialized to support the specific functions of network appliance 200. Additionally, input/output interface 242 enables wired devices to communicate with network appliance 200, such devices include, but are not limited to, keyboards, pointing devices, displays, printers, and the like. Furthermore, wireless communication unit 240 enables wireless communication over a limited distance with a mobile node (not shown).

The mass memory as described above illustrates another type of computer-readable media, namely computer storage media. Computer storage media may include volatile and nonvolatile, removable and non-removable media implemented in any method or technology for storage of information, such as computer readable instructions, data structures, program modules or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computing device.

The mass memory also stores program code and data for wireless communication protocol 230, and other programs 234 such as programs that enable network appliance 200 to perform its functions. Wireless communication protocol program 230 enables network appliance 200 to securely employ wireless interface unit 240 for wireless communication over a relatively short distance with a mobile node (not shown).

### Illustrative System Diagram

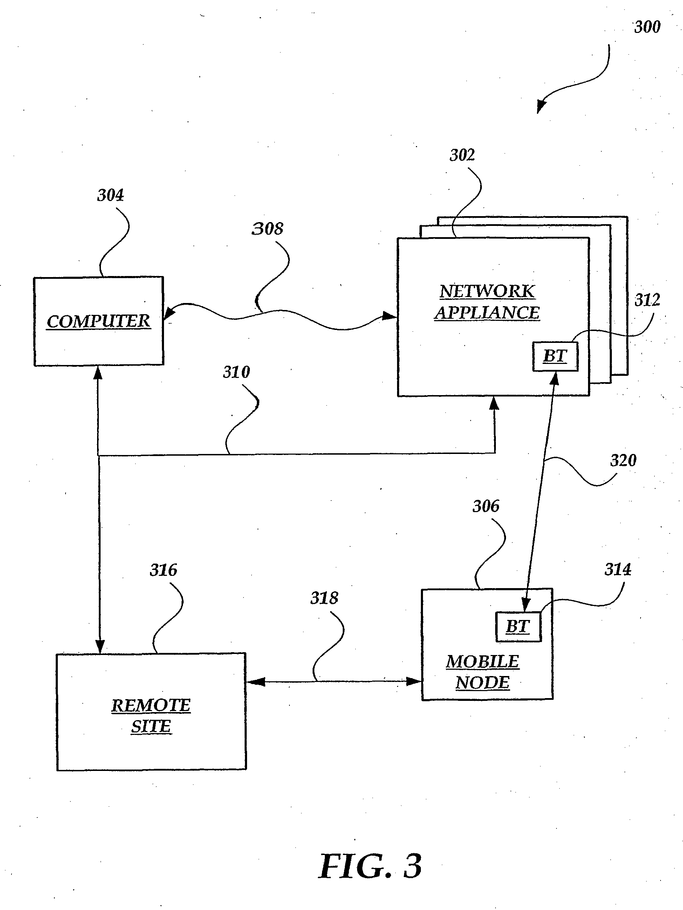

FIGURE 3 illustrates an over view 300 of an exemplary system where network appliance 302 is capable of communicating with computer 304 by two separate wired connections and one wireless connection. Typically, wired communication over network cable 310 is enabled by a protocol such as Ethernet and security is provided with a secure sockets layer (SSL), and the like. Although not shown in great detail, multiple network appliances in a data center may also be logically connected to network cable 310. Additionally, point to point cable 308 enables a direct wired communication link between computer 304 and network appliance 302 with at least one of a serial or parallel interface, including, but not limited to, USB, FireWire, RS 232, RS 485, IEEE 488, and the like.

Mobile node 306 includes wireless interface unit (BT) 314 for wirelessly communicating with wireless interface unit (BT) 312, which is included with network appliance 302. As shown, mobile node 314 can enable an authenticated operator to wirelessly communicate with the network appliance 302 and upload a software update over wireless communication link 320. This aspect of the invention is especially useful when it is inconvenient to connect a point to point cable and/or the network appliance is disconnected from a wired network connection for any one of several reasons, including, but not limited to, a disconnected network cable, hardware failure of the wired interface, corrupted boot manager software, and the like.

In many situations, remote site 316 can communicate with network appliance 302 over wired network cable 310. If remote site 316 is unable to communicate with network appliance 302 over network cable 310, the remote site can still access and communicate with the network appliance through separate communication link 318 which is enabled through the operation of mobile node 306.

In one embodiment, mobile node 314 operates as a wireless modem that receives a data stream for the software update from remote site 316 and wirelessly forwards the data stream to network appliance 302. In this mode, personnel at remote site 316 can provide the newest version of the software update to network appliance 302. For this embodiment, mobile node 314 can be provided with a relatively small memory because it does not have to have to store the entire software update prior to communicating the update to the network appliance. Also, mobile node 316 can receive the data stream from remote site 316 by communication link 318.

In another embodiment, mobile node 314 can be provided with a relatively larger memory, storage media or some other removable media for storing the software update prior to wirelessly uploading the software update to network appliance 302. In this embodiment, mobile node receives the software update out of band and then uploads the update to the network appliance as needed over wireless communication link.

### Illustrative Flow Diagram

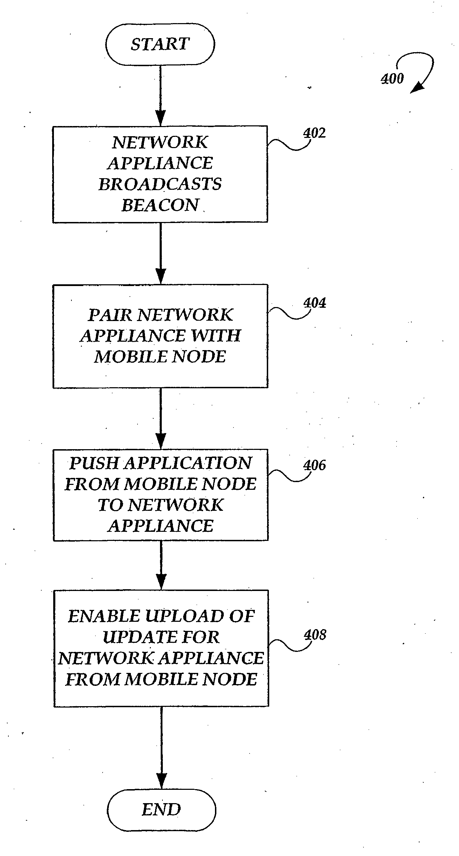

FIGURE 4 illustrates an exemplary flow chart for enabling a mobile node to wirelessly upload a software update to a network appliance. Moving from a start block, the process advances to block 402 where the network appliance broadcasts a beacon over a relatively short distance, e.g., ten meters. The beacon broadcast may occur under various conditions, including, but not limited to, reset, offline, and setup.

Moving to block 404, the network appliance pairs with the mobile node after determining that the mobile node is authenticated for wireless communication with the network appliance. In some cases, an initial code that was provided to the mobile node out of band such as the serial number of the network appliance may be used for authentication. At some later date, the system administrator could change this initial code to some other value.

Next, from the mobile node an application is pushed to the network appliance. The pushed application may be provided in various formats, including, but not limited to, a binary file, script, JAVA application, and the like. Once the application is installed on the network appliance, the process steps to block 408 where an authorized operator of the mobile node can employ an application to securely update software on the network appliance over the paired wireless communication link.

In one embodiment, the network appliance may provide the mobile node with a profile that can include, but is not limited to, a location identification number, IP address, type of the network appliance, and the like. Additionally, the communication between the paired mobile node and network appliance is encrypted to further prevent unauthorized uploading of a software update to the network appliance. Also, the mobile node may provide an application such as a browser application, JAVA application, and the like, to control the application pushed to the network appliance. Next, the process advances to an end block and continues processing other actions.

The above specification, examples and data provide a complete description of the manufacture and use of the composition of the invention. Since many embodiments of the invention can be made without departing from the scope of the invention, the invention resides in the claims hereinafter appended.

## Claims

1. A method (400) for providing an update to a network appliance (125) comprising a network interface (210) and a first wireless interface (240), comprising:
enabling the network appliance to provide (402) a beacon on said first wireless interface, wherein the beacon is created with a radio signal that is generated with low power; wherein said network appliance (125) is disposed in one or more data centers
if a mobile node (105) receives the beacon and is positioned within said one or more data centers or in a secure area known to an operator of said one or more data centers, enabling the mobile node to pair with the network appliance (125) on a second wireless interface included with the mobile node (105);
if the mobile node (105) is paired with the network appliance (125), pushing (406) an application from the mobile node (105) to the network appliance (125); and
enabling (408) the mobile node (105) to wirelessly communicate at least one update to the pushed application over a short distance, wherein the update is provided to the network appliance (125) for execution.

2. The method of Claim 1, wherein the update is stored in the mobile node (105) prior to its communication to the network appliance (125).

3. The method of Claim 1, wherein the mobile node (105) is in communication with a remote site that provides the update through a wireless communication link established between the mobile node (105) and the network appliance (125).

4. The method of Claim 1, wherein the pushed application is at least one of a JAVA application, binary file, and script.

5. The method of Claim 1, wherein the beacon is generated with approximately one milliwatt of power and the short distance is approximately 10 meters.

6. The method of Claim 1, further comprising enabling the network appliance (125) to communicate a profile to the mobile node (105), wherein profile includes at least one of an identifier, type and IP address.

7. The method of Claim 1, wherein enabling the mobile node (105) to wirelessly communicate with the network appliance (125), further comprises authenticating an operator of the mobile node.

8. The method of Claim 1, wherein the wireless communication is based on a Bluetooth specification.

9. The method of Claim 1, wherein the network appliance (125) further comprises at least one of a router, switch, firewall, content filter, file server, load balancer, and hub.

10. The method of Claim 1, wherein the mobile node (105) further comprises at least one of a cellular telephone, smart phone, pager, radio frequency (RF) communication device, Personal Digital Assistant (PDA), handheld computer, laptop computer, personal computer, multiprocessor system, microprocessor-based consumer electronic device, programmable consumer device, network PC, and wearable computer.

11. The method of Claim 1, wherein the managing of the operation of the network appliance (125) further comprises providing at least one operation, including configuration, load balancing, IP address assignment, metric collection, metric analysis, updates, maintenance, and security measures.

12. A system (100) for providing an update to a network appliance (125) with a mobile node (105), comprising
a first wireless interface that is included with the network appliance (125) and enables the network appliance (125) to provide a beacon, wherein the beacon is generated with low power, wherein said network appliance (125) is disposed in one or more data centers;
a network interface (210) that is included with the network appliance (125) for coupling the network appliance to a communications network;
a second wireless interface that is included with the mobile node (105), wherein if the mobile node (105) receives the beacon and is positioned within said one or more data centers or in a secure area known to an operator of said one or more data centers, the second wireless interface enables the mobile node (105) to pair with the network appliance (125), and
an application that is pushed from the mobile node (105) to the network appliance (125), wherein the application enables the mobile node (105) to wirelessly communicate at least one update over a short distance to the network appliance (125), and wherein the update is provided to the network appliance (125) for execution.

13. The system of Claim 12, wherein the pushed application is at least one of a JAVA application, binary file, and script.

14. The system of Claim 12, wherein the application enabling the mobile node 9105) to wirelessly communicate with the network appliance (125), further authenticates an operator of the mobile node (105).

15. The system of Claim 12, wherein the wireless communication is based on a Bluetooth specification.

16. The system of Claim 12, wherein the managing of the operation of the network appliance (125) further comprises providing at least one operation for execution, including configuration, load balancing, IP address assignment, metric collection, metric analysis, updates, maintenance, and security measures.

17. The system of Claim 12, further comprising a profile that is communicated by the network appliance (125) to the mobile node (105), wherein profile includes at least one of an identifier, type and IP address.

18. A mobile node (105) including:
a first wireless interface configured to enable the mobile node to pair with a network appliance (125) comprising a second wireless interface and a network interface disposed in one or more data centers if the mobile node receives a low power beacon from said second wireless interface and said mobile node is positioned within said one or more data centers or in a secure area known to an operator of said one or more data centers;
the mobile node being further configured to:
push an application to the network appliance, wherein the application enables the mobile node to wirelessly communicate at least one update over a sort distance to the network appliance and wherein the update is provided to the network appliance for execution.

19. The mobile node of Claim 18, wherein the pushed application is at least one of a JAVA application, binary file, and script.

20. The mobile node of Claim 18, wherein the application enabling the mobile node (105) to wirelessly communicate with the network appliance (125), further authenticates an operator of the mobile node (105).

21. The mobile node of Claim 18, wherein the wireless communication is based on a Bluetooth specification.

22. The mobile node of Claim 18, wherein the managing of the operation of the network appliance (125) further comprises providing at least one operation for execution,
including configuration, load balancing, IP address assignment, metric collection, metric analysis, updates, maintenance, and security measures.

23. The mobile node of Claim 18, wherein the network appliance (125) provides a profile.

24. A computer readable media, tangibly embodying instructions to perform actions, comprising:
enabling a network appliance (125) comprising a first wireless interface and a network interface to provide a beacon on said first wireless interface, wherein the beacon is generated with low power; wherein said network appliance is disposed in one or more data centers
if a mobile node (105) receives the beacon and is positioned within one or more data centers or in a secure area known to an operator of said one or more data centers, enabling the mobile node (105) to pair with the network appliance ;
if the mobile node is paired with the network appliance (125), pushing an application from the mobile node (105) to the network appliance; and
enabling the mobile node (105) to wirelessly communicate at least one update to the pushed application over a short distance, wherein the update is provided to the network appliance (125) for execution.

25. A method comprising:
enabling a mobile node (105) to pair on a first wireless interface with a network appliance (125) comprising the first wireless interface and a network interface disposed in one or more data centers if the mobile node (105) receives a low power beacon from a second wireless interface included with said network appliance (125) and said mobile node (105) is positioned within said one or more data centers or in a secure area known to an operator of said one or more data centers;
pushing an application to the network appliance, wherein the application enables the mobile node (105) to wirelessly communicate at least one update over a short distance to the network appliance (125) and wherein the update is provided to the network appliance (125) for execution.

## Patentansprüche

1. Verfahren (400) zum Übermitteln eines Updates an ein Netzwerkgerät (125), das eine Netzwerkschnittstelle (210) und eine erste Drahtlosschnittstelle (240) umfasst, und das Folgendes umfasst:
Veranlassen des Netzwerkgerätes, ein Peilsignal auf der ersten Drahtlosschnittstelle bereitzustellen (402), wobei das Peilsignal mit einem Funksignal erzeugt wird, das mit geringer Leistung generiert wird; wobei das Netzwerkgerät (125) in einem oder mehreren Datenzentren angeordnet ist,
wenn ein Mobilfunkknoten (105) das Peilsignal empfängt und innerhalb des einen oder der mehreren Datenzentren oder in einem sicheren Bereich, der einem Betreiber des einen oder der mehreren Datenzentren bekannt ist, positioniert ist, Veranlassen, dass sich der Mobilfunkknoten mit dem Netzwerkgerät (125) auf einer zweiten Drahtlosschnittstelle paart, die in dem Mobilfunkknoten (105) enthalten ist;
wenn der Mobilfunkknoten (105) mit dem Netzwerkgerät (125) gepaart ist, Verschieben (406) einer Anwendung von dem Mobilfunkknoten (105) zu dem Netzwerkgerät (125); und
Veranlassen (408) des Mobilfunkknotens (105), mindestens ein Update drahtlos über eine kurze Distanz an die verschobene Anwendung zu übermitteln, wobei das Update dem Netzwerkgerät (125) zur Ausführung übergeben wird.

2. Verfahren nach Anspruch 1, wobei das Update in dem Mobilfunkknoten (105) vor seiner Übermittlung an das Netzwerkgerät (125) gespeichert wird.

3. Verfahren nach Anspruch 1, wobei der Mobilfunkknoten (105) mit einem räumlich abgesetzten Standort kommuniziert, der das Update über einen Drahtloskommunikationslink übermittelt, der zwischen dem Mobilfunkknoten (105) und dem Netzwerkgerät (125) hergestellt wird.

4. Verfahren nach Anspruch 1, wobei die verschobene Anwendung mindestens eines von einer JAVA-Anwendung, einer binären Datei und einem Script ist.

5. Verfahren nach Anspruch 1, wobei das Peilsignal mit ungefähr einem Milliwatt Leistung generiert wird und die kurze Distanz ungefähr 10 Meter beträgt.

6. Verfahren nach Anspruch 1, das des Weiteren umfasst, das Netzwerkgerät (125) zu veranlassen, ein Profil an den Mobilfunkknoten (105) zu übermitteln, wobei das Profil mindestens eines von einem Identifikator, einem Typ und einer IP-Adresse enthält.

7. Verfahren nach Anspruch 1, wobei das Veranlassen, dass der Mobilfunkknoten (105) drahtlos mit dem Netzwerkgerät (125) kommuniziert, des Weiteren das Authentifizieren eines Betreibers des Mobilfunkknotens umfasst.

8. Verfahren nach Anspruch 1, wobei die Drahtloskommunikation auf einer Bluetooth-Spezifikation basiert.

9. Verfahren nach Anspruch 1, wobei das Netzwerkgerät (125) des Weiteren mindestens eines von Folgendem umfasst: einen Router, eine Vermittlung, eine Firewall, einen Inhaltsfilter, einen Dateiserver, einen Lastausgleicher und einen Hub.

10. Verfahren nach Anspruch 1, wobei der Mobilfunkknoten (105) des Weiteren mindestens eines von Folgendem umfasst: ein Mobiltelefon, ein Smartphone, einen Pager, ein Hochfrequenz (HF)-Kommunikationsgerät, einen Personal Digital Assistant (PDA), einen Handcomputer, einen Laptop-Computer, einen Personalcomputer, ein Multiprozessorsystem, ein Mikroprozessorgestütztes konsumelektronisches Gerät, ein programmierbares Konsumgerät, einen Netzwerk-PC, und einen tragbaren Computer.

11. Verfahren nach Anspruch 1, wobei das Verwalten des Betriebes des Netzwerkgerätes (125) des Weiteren mindestens eine Operation umfasst, einschließlich Konfiguration, Lastausgleich, IP-Adressenzuweisung, Erfassen von Messgrößen, Analyse von Messgrößen, Updates, Wartung und Sicherheitsmaßnahmen.

12. System (100) zum Übermitteln eines Updates an ein Netzwerkgerät (125) mit einem Mobilfunkknoten (105), wobei das System Folgendes umfasst:
eine erste Drahtlosschnittstelle, die in dem Netzwerkgerät (125) enthalten ist und das Netzwerkgerät (125) veranlasst, ein Peilsignal bereitzustellen, wobei das Peilsignal mit geringer Leistung generiert wird, wobei das Netzwerkgerät (125) in einem oder mehreren Datenzentren angeordnet ist;
eine Netzwerkschnittstelle (210), die in dem Netzwerkgerät (125) enthalten ist, um das Netzwerkgerät mit einem Kommunikationsnetz zu koppeln;
eine zweite Drahtlosschnittstelle, die in dem Mobilfunkknoten (105) enthalten ist, wobei, wenn der Mobilfunkknoten (105) das Peilsignal empfängt und innerhalb des einen oder der mehreren Datenzentren oder in einem sicheren Bereich, der einem Betreiber des einen oder der mehreren Datenzentren bekannt ist, positioniert ist, die zweite Drahtlosschnittstelle den Mobilfunkknoten (105) veranlasst, sich mit dem Netzwerkgerät (125) zu paaren, und
eine Anwendung, die von dem Mobilfunkknoten (105) zu dem Netzwerkgerät (125) verschoben wird, wobei die Anwendung den Mobilfunkknoten (105) veranlasst, mindestens ein Update drahtlos über eine kurze Distanz an das Netzwerkgerät (125) zu übermitteln, und wobei das Update dem Netzwerkgerät (125) zur Ausführung übergeben wird.

13. System nach Anspruch 12, wobei die verschobene Anwendung mindestens eines von einer JAVA-Anwendung, einer binären Datei und einem Script ist.

14. System nach Anspruch 12, wobei die Anwendung, die den Mobilfunkknoten (105) veranlasst, drahtlos mit dem Netzwerkgerät (125) zu kommunizieren, des Weiteren einen Betreiber des Mobilfunkknotens (105) authentifiziert.

15. System nach Anspruch 12, wobei die Drahtloskommunikation auf einer Bluetooth-Spezifikation basiert.

16. System nach Anspruch 12, wobei das Verwalten des Betriebes des Netzwerkgerätes (125) des Weiteren umfasst, mindestens eine Operation zum Ausführen bereitzustellen, einschließlich Konfiguration, Lastausgleich, IP-Adressenzuweisung, Erfassen von Messgrößen, Analyse von Messgrößen, Updates, Wartung und Sicherheitsmaßnahmen.

17. System nach Anspruch 12, das des Weiteren ein Profil umfasst, das durch das Netzwerkgerät (125) an den Mobilfunkknoten (105) übermittelt wird, wobei das Profil mindestens eines von einem Identifikator, einem Typ und einer IP-Adresse enthält.

18. Mobilfunkknoten (105), der Folgendes enthält:
eine erste Drahtlosschnittstelle, die dafür konfiguriert ist, den Mobilfunkknoten zu veranlassen, sich mit einem Netzwerkgerät (125) zu paaren, das eine zweite Drahtlosschnittstelle und eine Netzwerkschnittstelle umfasst, die in einem oder mehreren Datenzentren angeordnet ist, wenn der Mobilfunkknoten ein Peilsignal mit geringer Leistung von der zweiten Drahtlosschnittstelle empfängt und der Mobilfunkknoten innerhalb des einen oder der mehreren Datenzentren oder in einem sicheren Bereich, der einem Betreiber des einen oder der mehreren Datenzentren bekannt ist, positioniert ist;
wobei der Mobilfunkknoten des Weiteren für Folgendes konfiguriert ist:
Verschieben einer Anwendung zu dem Netzwerkgerät, wobei die Anwendung den Mobilfunkknoten veranlasst, mindestens ein Update drahtlos über eine kurze Distanz zu dem Netzwerkgerät zu übermitteln, und wobei das Update an das Netzwerkgerät zur Ausführung übergeben wird.

19. Mobilfunkknoten nach Anspruch 18, wobei die verschobene Anwendung mindestens eines von einer JAVA-Anwendung, einer binären Datei und einem Script ist.

20. Mobilfunkknoten nach Anspruch 18, wobei die Anwendung, die veranlasst, dass der Mobilfunkknoten (105) drahtlos mit dem Netzwerkgerät (125) kommuniziert, des Weiteren einen Betreiber des Mobilfunkknotens (105) authentifiziert.

21. Mobilfunkknoten nach Anspruch 18, wobei die Drahtloskommunikation auf einer Bluetooth-Spezifikation basiert.

22. Mobilfunkknoten nach Anspruch 18, wobei das Verwalten des Betriebes des Netzwerkgerätes (125) des Weiteren umfasst, mindestens eine Operation zum Ausführen bereitzustellen, einschließlich Konfiguration, Lastausgleich, IP-Adressenzuweisung, Erfassen von Messgrößen, Analyse von Messgrößen, Updates, Wartung und Sicherheitsmaßnahmen.

23. Mobilfunkknoten nach Anspruch 18, wobei das Netzwerkgerät (125) ein Profil bereitstellt.

24. Computer-lesbares Medium, das in greifbarer Form Instruktionen zum Ausführen von Aktionen verkörpert, die Folgendes umfassen:
Veranlassen eines Netzwerkgerätes (125), das eine erste Drahtlosschnittstelle und eine Netzwerkschnittstelle umfasst, ein Peilsignal auf der ersten Drahtlosschnittstelle bereitzustellen, wobei das Peilsignal mit geringer Leistung generiert wird; wobei das Netzwerkgerät in einem oder mehreren Datenzentren angeordnet ist,
wenn ein Mobilfunkknoten (105) das Peilsignal empfängt und innerhalb eines oder mehrerer Datenzentren oder in einem sicheren Bereich, der einem Betreiber des einen oder der mehreren Datenzentren bekannt ist, positioniert ist, Veranlassen, dass sich der Mobilfunkknoten (105) mit dem Netzwerkgerät paart;
wenn der Mobilfunkknoten mit dem Netzwerkgerät (125) gepaart ist, Verschieben einer Anwendung von dem Mobilfunkknoten (105) zu dem Netzwerkgerät; und
Veranlassen des Mobilfunkknotens (105), mindestens ein Update drahtlos über eine kurze Distanz an die verschobene Anwendung zu übermitteln, wobei das Update dem Netzwerkgerät (125) zur Ausführung übergeben wird.

25. Verfahren, das Folgendes umfasst:
Veranlassen eines Mobilfunkknotens (105), sich an einer ersten Drahtlosschnittstelle mit einem Netzwerkgerät (125) zu paaren, das die erste Drahtlosschnittstelle und eine Netzwerkschnittstelle umfasst, die in einem oder mehreren Datenzentren angeordnet ist, wenn der Mobilfunkknoten (105) ein Peilsignal mit geringer Leistung von einer zweiten Drahtlosschnittstelle empfängt, die in dem Netzwerkgerät (125) enthalten ist, und der Mobilfunkknoten (105) innerhalb des einen oder der mehreren Datenzentren oder in einen sicheren Bereich, der einem Betreiber des einen oder der mehreren Datenzentren bekannt ist, positioniert ist;
Verschieben einer Anwendung zu dem Netzwerkgerät, wobei die Anwendung den Mobilfunkknoten (105) veranlasst, mindestens ein Update drahtlos über eine kurze Distanz zu dem Netzwerkgerät (125) zu übermitteln, und wobei das Update dem Netzwerkgerät (125) zur Ausführung übergeben wird.

## Revendications

1. Procédé (400) pour fournir une mise à jour à un appareil de réseau (125) comprenant une interface de réseau (210) et une première interface sans fil (240), consistant à :
permettre à l'appareil de réseau de fournir (402) une balise sur ladite première interface sans fil, dans lequel la balise est créée avec un signal radio qui est généré avec une faible puissance ; dans lequel ledit appareil de réseau (125) est disposé dans un ou plusieurs centres de données si un noeud mobile (105) reçoit la balise et est positionné au sein desdits un ou plusieurs centres de données ou dans une zone sécurisée connue d'un opérateur desdits un ou plusieurs centres de données, permettre au noeud mobile de se jumeler avec l'appareil de réseau (125) sur une seconde interface sans fil intégrée au noeud mobile (105) ;
si le noeud mobile (105) est jumelé avec l'appareil de réseau (125), pousser (406) une application depuis le noeud mobile (105) vers l'appareil de réseau (125) ; et
permettre (408) au noeud mobile (105) de communiquer sans fil au moins une mise à jour à l'application poussée sur une courte distance, dans lequel la mise à jour est fournie à l'appareil de réseau (125) à des fins d'exécution.

2. Procédé selon la revendication 1, dans lequel la mise à jour est stockée dans le noeud mobile (105) avant sa communication à l'appareil de réseau (125).

3. Procédé selon la revendication 1, dans lequel le noeud mobile (105) est en communication avec un site distant qui fournit la mise à jour par l'intermédiaire d'une liaison de communication sans fil établie entre le noeud mobile (105) et l'appareil de réseau (125).

4. Procédé selon la revendication 1, dans lequel l'application poussée est au moins l'un d'une application JAVA, d'un fichier binaire et d'un script.

5. Procédé selon la revendication 1, dans lequel la balise est générée avec approximativement un milliwatt de puissance et la courte distance est approximativement de 10 mètres.

6. Procédé selon la revendication 1, consistant en outre à permettre à l'appareil de réseau (125) de communiquer un profil au noeud mobile (105), dans lequel le profil comporte au moins l'un d'un identifiant, d'un type et d'une adresse IP.

7. Procédé selon la revendication 1, dans lequel le fait de permettre au noeud mobile (105) de communiquer sans fil avec l'appareil de réseau (125) consiste en outre à authentifier un opérateur du noeud mobile.

8. Procédé selon la revendication 1, dans lequel la communication sans fil est basée sur une spécification Bluetooth.

9. Procédé selon la revendication 1, dans lequel l'appareil de réseau (125) comprend en outre au moins l'un d'un routeur, d'un commutateur, d'un pare-feu, d'un filtre de contenu, d'un serveur de fichiers, d'un équilibreur de charge et d'un concentrateur.

10. Procédé selon la revendication 1, dans lequel le noeud mobile (105) comprend en outre au moins l'un d'un téléphone cellulaire, d'un téléphone intelligent, d'un téléavertisseur, d'un dispositif de communication radiofréquence (RF), d'un assistant numérique personnel (PDA), d'un ordinateur de poche, d'un ordinateur portable, d'un ordinateur personnel, d'un système multiprocesseur, d'un dispositif électronique grand public à base de microprocesseur, d'un dispositif grand public programmable, d'un PC en réseau et d'un ordinateur vestimentaire.

11. Procédé selon la revendication 1, dans lequel la gestion du fonctionnement de l'appareil de réseau (125) consiste en outre à mettre en oeuvre au moins un fonctionnement qui comprend une configuration, un équilibrage de charge, l'affectation d'une adresse IP, l'obtention d'une métrique, l'analyse d'une métrique, des mises à jour, une maintenance et des mesures de sécurité.

12. Système (100) pour fournir une mise à jour à un appareil de réseau (125) comportant un noeud mobile (105), comprenant
une première interface sans fil qui est intégrée à l'appareil de réseau (125) et permet à l'appareil de réseau (125) de fournir une balise, dans lequel la balise est générée avec une faible puissance, dans lequel ledit appareil de réseau (125) est disposé dans un ou plusieurs centres de données ;
une interface de réseau (210) qui est intégrée à l'appareil de réseau (125) pour relier l'appareil de réseau à un réseau de communications ;
une seconde interface sans fil qui est intégrée au noeud mobile (105), dans lequel, si le noeud mobile (105) reçoit la balise et est positionné au sein desdits un ou plusieurs centres de données ou dans une zone sécurisée connue d'un opérateur desdits un ou plusieurs centres de données, la seconde interface sans fil permet au noeud mobile (105) de se jumeler avec l'appareil de réseau (125), et
une application qui est poussée depuis le noeud mobile (105) vers l'appareil de réseau (125), dans lequel l'application permet au noeud mobile (105) de communiquer sans fil au moins une mise à jour sur une courte distance à l'appareil de réseau (125), et dans lequel la mise à jour est fournie à l'appareil de réseau (125) à des fins d'exécution.

13. Système selon la revendication 12, dans lequel l'application poussée est au moins l'un d'une application JAVA, d'un fichier binaire et d'un script.

14. Système selon la revendication 12, dans lequel l'application permettant au noeud mobile (105) de communiquer sans fil avec l'appareil de réseau (125) authentifie en outre un opérateur du noeud mobile (105).

15. Système selon la revendication 12, dans lequel la communication sans fil est basée sur une spécification Bluetooth.

16. Système selon la revendication 12, dans lequel la gestion du fonctionnement de l'appareil de réseau (125) consiste en outre à mettre en oeuvre au moins un fonctionnement à des fins d'exécution, qui comprend une configuration, un équilibrage de charge, l'affectation d'une adresse IP, l'obtention d'une métrique, l'analyse d'une métrique, des mises à jour, une maintenance et des mesures de sécurité.

17. Système selon la revendication 12, comprenant en outre un profil qui est communiqué par l'appareil de réseau (125) au noeud mobile (105), dans lequel le profil comporte au moins l'un d'un identifiant, d'un type et d'une adresse IP.

18. Noeud mobile (105) qui comprend :
une première interface sans fil configurée pour permettre au noeud mobile de se jumeler avec un appareil de réseau (125) comprenant une seconde interface sans fil et une interface de réseau disposée dans un ou plusieurs centres de données si le noeud mobile reçoit une balise de faible puissance en provenance de ladite seconde interface sans fil et ledit noeud mobile est positionné au sein desdits un ou plusieurs centres de données ou dans une zone sécurisée connue d'un opérateur desdits un ou plusieurs centres de données ;
le noeud mobile étant en outre configuré pour :
pousser une application vers l'appareil de réseau, dans lequel l'application permet au noeud mobile de communiquer sans fil au moins une mise à jour sur une courte distance à l'appareil de réseau et dans lequel la mise à jour est fournie à l'appareil de réseau à des fins d'exécution.

19. Noeud mobile selon la revendication 18, dans lequel l'application poussée est au moins l'un d'une application JAVA, d'un fichier binaire et d'un script.

20. Noeud mobile selon la revendication 18, dans lequel l'application permettant au noeud mobile (105) de communiquer sans fil avec l'appareil de réseau (125) authentifie en outre un opérateur du noeud mobile (105).

21. Noeud mobile selon la revendication 18, dans lequel la communication sans fil est basée sur une spécification Bluetooth.

22. Noeud mobile selon la revendication 18, dans lequel la gestion du fonctionnement de l'appareil de réseau (125) consiste en outre à mettre en oeuvre au moins un fonctionnement à des fins d'exécution, qui comprend une configuration, un équilibrage de charge, l'affectation d'une adresse IP, l'obtention d'une métrique, l'analyse d'une métrique, des mises à jour, une maintenance et des mesures de sécurité.

23. Noeud mobile selon la revendication 18, dans lequel l'appareil de réseau (125) fournit un profil.

24. Support lisible par ordinateur, mettant en oeuvre de manière tangible des instructions afin d'effectuer des actions, consistant à :
permettre à un appareil de réseau (125) comprenant une première interface sans fil et une interface de réseau de fournir une balise sur ladite première interface sans fil, dans lequel la balise est générée avec une faible puissance ; dans lequel ledit appareil de réseau est disposé dans un ou plusieurs centres de données si un noeud mobile (105) reçoit la balise et est positionné au sein d'un ou plusieurs centres de données ou dans une zone sécurisée connue d'un opérateur desdits un ou plusieurs centres de données, permettre au noeud mobile (105) de se jumeler avec l'appareil de réseau ;
si le noeud mobile est jumelé avec l'appareil de réseau (125), pousser une application depuis le noeud mobile (105) vers l'appareil de réseau ; et
permettre au noeud mobile (105) de communiquer sans fil au moins une mise à jour à l'application poussée sur une courte distance, dans lequel la mise à jour est fournie à l'appareil de réseau (125) à des fins d'exécution.

25. Procédé consistant à :
permettre à un noeud mobile (105) de se jumeler sur une première interface sans fil avec un appareil de réseau (125) comprenant la première interface sans fil et une interface de réseau disposée dans un ou plusieurs centres de données si le noeud mobile (105) reçoit une balise de faible puissance en provenance d'une seconde interface sans fil intégrée audit appareil de réseau (125) et ledit noeud mobile (105) est positionné au sein desdits un ou plusieurs centres de données ou dans une zone sécurisée connue d'un opérateur desdits un ou plusieurs centres de données ;
pousser une application vers l'appareil de réseau, dans lequel l'application permet au noeud mobile (105) de communiquer sans fil au moins une mise à jour sur une courte distance à l'appareil de réseau (125) et dans lequel la mise à jour est fournie à l'appareil de réseau (125) à des fins d'exécution.
